# EUROPEAN PATENT SPECIFICATION

(11) **EP 3 188 286 B1**
(45) Date of publication and mention of the grant of the patent: **06.05.2020**
(21) Application number: 16189579.2
(22) Date of filing: 20.09.2016
(51) Int. Cl.: H01M 2/20

(54) **BATTERY ASSEMBLY WITH RESISTIVE COMPENSATION TRACES BETWEEN BATTERY TERMINALS**
BATTERIEANORDNUNG MIT WIDERSTANDSAUSGLEICHSLEITUNGEN ZWISCHEN BATTERIENPOLEN
ENSEMBLE BATTERIE CONTENANT DES TRACES COMPENSATOIRES DE RÉSISTANCE ÉLECTRIQUE ENTRE DES PÔLES DE BATTERIES.

(30) Priority: 30.12.2015 US 201562272699 P
(43) Date of publication of application: 05.07.2017
(73) Proprietor: Ampd Energy Limited, Shatin, N.T., Hong Kong (HK)
(72) Inventor: NG, Brandon Boon Soon, Shatin, N.T (HK); VALENTE, Luciano Gurgel, Shatin, N.T (HK); IP, Clayton, Shatin, N.T (HK); CHAN, Kevin, Shatin, N.T (HK); LV, Ya, Shatin, N.T (HK)
(74) Representative: Cabinet Chaillot

(56) References cited:
- WO-A1-2008/050953
- US-A- 4 411 970
- US-A1- 2011 250 487
- US-A1- 2012 148 877
- B. WU ET AL.: "FAULT ANALYSIS IN BETTERY MODULE DESIGN FOR ELECTRIC AN HYBRID VEHICLES", 6TH IET INTERNATIONAL CONVERENCE ON POWER ELECTRONICS, MACHINES AND DRIVES (PEMD 2012) , 29 March 2012 (2012-03-29), XP002765035, Retrieved from the Internet: URL:http://www.crossref.org/iPage?doi=10.1 049%2Fcp.2012.0307 [retrieved on 2016-12-16]
- GREGORY J. OFFER ET AL.: "MODULE DESIGN AND FAULT DIAGNOSIS IN ELECTRIC VEHICLE BATTERIES", JOURNAL OF POWER SOURCES, vol. 206, 21 January 2012 (2012-01-21), pages 383-392, XP002765036, DOI: 10.1016/j.jpowsour.2012.01.087

## Description

### FIELD OF THE INVENTION

The present invention relates to a battery assembly that includes a plurality of batteries positioned between two printed circuit boards with fuses.

### BACKGROUND

Electronic devices often require power from a portable power supply. These power supplies can include rechargeable lithium-ion batteries that are arranged in an assembly or pack. The batteries are arranged in series or in parallel to obtain a desired capacity or voltage.

In view of the demand for portable power, improvements in battery assemblies and power components are desired.

### BRIEF DESCRIPTION OF THE DRAWINGS

Figure 1A shows a battery assembly in accordance with an example embodiment.
Figure 1B shows a cut-away view of the battery assembly of Fig. 1A in accordance with an example embodiment.
Figure 1C shows a top view of a printed circuit board of a battery assembly in accordance with an example embodiment.
Figure 2 shows a layout of a printed circuit board of a battery assembly in accordance with an example embodiment.
Figure 3 shows a battery system in accordance with an example embodiment.
Figure 4 shows a support structure of a battery assembly in accordance with an example embodiment.
Figure 5 shows a graph of current distribution from batteries to a connection point in accordance with an example embodiment.

### SUMMARY OF THE INVENTION

One example embodiment is a battery assembly that includes a plurality of batteries. The battery assembly includes a printed circuit board integrated with plural fuses and resistors. The sizes of the resistors vary based on a distance between the batteries and a connection point to compensate for resistance differences from each battery to the connection point.

In particular, according the present invention is disclosed a battery assembly as defined in claim 1, comprising:
a first printed circuit board (PCB) having a plurality of first conductive shapes arranged in a matrix-shape;
a second PCB oppositely disposed from the first PCB and having a plurality of second conductive shapes arranged in a matrix-shape;
a plurality of first springs disposed on the first conductive shapes of the first PCB;
a plurality of second springs disposed on the second conductive shapes of the second PCB;
a plurality of batteries stacked between the first and second PCBs in a side-by-side relationship each having a first end in electrical contact with one of the first springs on the first PCB and a second end in electrical contact with one of the second springs on the second PCB;
a plurality of fuses integrally formed in the second PCB, each of the fuses electrically connected with one of the second conductive shapes; and
a plurality of compensation traces each connected with one of the fuses and a bus line where a current flow along, wherein sizes of the compensation traces vary based on a distance between the second conductive shapes and a connection point on the bus line to compensate for resistance differences from each battery to the connection point
wherein the compensation traces located at a first distance from the connection point have a higher resistance compared with the compensation traces located at a second distance from the connection point that is longer than the first distance.

Also disclosed is a battery assembly, not forming part of claimed invention, comprising:
a first printed circuit board (PCB) in electrical contact with a plurality of first springs arranged in a matrix-shape;
a second PCB integrated with a plurality of fuses each electrically connected with one of second springs that are disposed on the second PCB;
a plurality of batteries electrically connected to each other and located between the first PCB and the second PCB with each of the batteries including a first terminal in electrical contact with one of the first springs on the first PCB and a second terminal in electrical contact with one of the second springs on the second PCB; and
a plurality of resistors having a first end connected with one of the fuses and a second end connected with a bus line,
wherein each of the resistors has a predetermined resistance value to compensate for resistance differences from each battery to the connection point
wherein the resistor located at a first distance from the connection point has a higher resistance compared with the resistor located at a second distance from the connection point that is longer than the first distance.

Also disclosed is a battery assembly, not forming part of claimed invention, that houses a plurality of rechargeable batteries, comprising:
a first aluminum printed circuit board (PCB) having a plurality of first conductive regions arranged in a grid of rows and columns;
a second aluminum PCB oppositely disposed from the first aluminum PCB and having a plurality of second conductive regions arranged in a grid of rows and columns
a plurality of first elastic tabs disposed on the first conductive regions of the first aluminum PCB to electrically connect a first end of the rechargeable batteries with one of the first conductive regions of the first aluminum PCB;
a plurality of second elastic tabs disposed on the second conductive regions of the second aluminum PCB to electrically connect a second end of the rechargeable batteries with one of the second conductive regions of the second aluminum PCB;
a plurality of fuses integrally formed in the second aluminum PCB, each of the fuses electrically connected with one of the second conductive regions; and
a plurality of compensation traces each connected with one the fuses, wherein resistances of the compensation traces vary based on a distance to a connection point such that a current value variation for currents flowing through the compensation traces is less than 12 %
wherein the compensation traces located at a first distance from the connection point have a higher resistance compared with the compensation traces located at a second distance from the connection point that is longer than the first distance.

Other example embodiments are discussed herein.

### DETAILED DESCRIPTION

Example embodiments include battery assemblies that provide a rechargeable power supply that includes one or more rechargeable batteries. The batteries are housed in a module or an assembly that is portable.

An example embodiment includes a battery assembly with a plurality of batteries that are individually fused and interconnected through a printed circuit board (PCB). The fuses are integrated in the PCB and electrically connect batteries in parallel and/or in series. In the event of an overcurrent situation, the fuses burn, melt, or break and electrically disconnect.

In one embodiment for example, the batteries are housed or sandwiched between two printed circuit boards (PCBs) with integrated fuses. Springs on the PCBs contact the battery ends. Each of the batteries are individually fused and connected with each other in parallel or in series. Compensation resistors or traces electrically connect the batteries to a bus line and to a power collector. Current from the batteries flows along the bus line and is collected by the power collector. The sizes of the compensation traces that are connected with the bus line vary based on a distance between each of the battery terminals and a connection point that is at the intersection of the bus line and the power collector. By varying the sizes of the compensation traces, the resistance of the compensation traces varies to compensate for the different path resistances along the bus line from the end of each compensation trace that joins the bus line to the power collector, and hence the variations of current drawn from each of the batteries to the corresponding connection point are minimized. In one example, the variation of current is less than 12%.

In one example embodiment, voltages of each row of batteries that are connected to each other in parallel are measured by a voltage detector. The voltage detector measures the voltage values of each row of batteries and sends the measured voltage values to a battery management system (BMS). Temperature detectors (such as thermocouples) measure temperature values at a plurality of locations in the battery system and send the measured temperature values to the BMS. The BMS receives temperature values from the temperature detector and voltage values from the voltage detector, and shut down or ramp down the battery system when a received value is higher than a threshold.

A transient voltage suppressor is included in the battery assembly to react to sudden or momentary overvoltage conditions and functions as a low pass filter to filter voltage spikes and protect the battery assembly from being damaged by overstress.

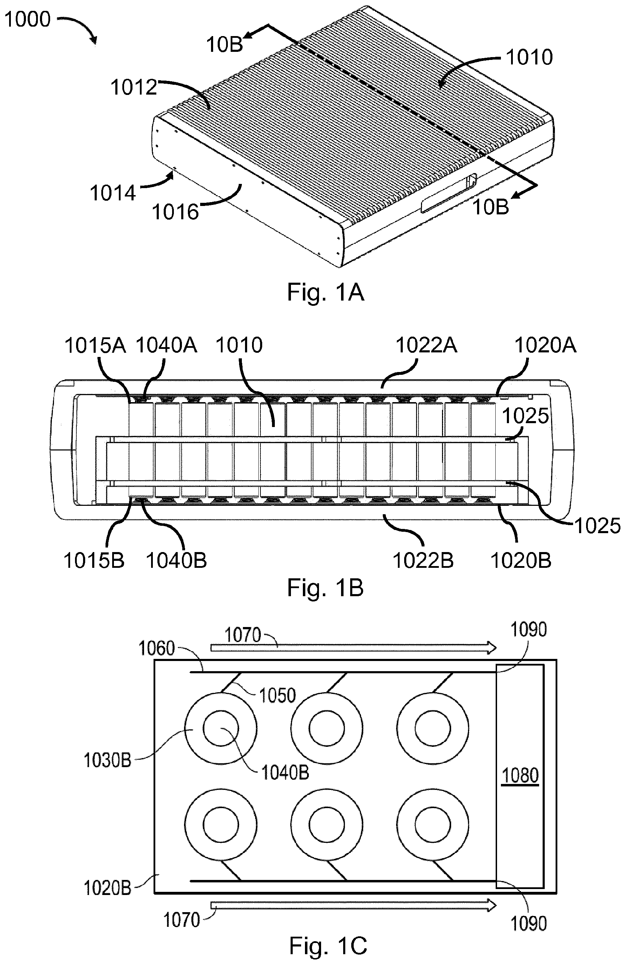

Figure 1A shows a battery pack or battery assembly 1000 enclosed in a housing 1010 with a rectangular shape. The housing 1010 includes a top cover or lid 1012, a bottom cover or base 1014, and a plurality of side covers 1016 that house, enclose, and/or protect components of the battery assembly. The housing provides the battery assembly with a form factor such that two or more assemblies can be stacked, electrically connected, and transported together.

Figure 1B shows the battery assembly 1000 with the side covers removed. The battery assembly 1000 includes a plurality of batteries 1010 positioned or sandwiched between a top cover or lid 1022A and a bottom cover or base 1022B. Each battery has a first end or terminal 1015A and a second end or terminal 1015B. The first end 1015A electrically contacts or abuts a top or first printed circuit board (PCB) 1020A via a top or first spring or elastic tab 1040A, and the second end 1015B electrically contacts or abuts a bottom or second PCB 1020B via a bottom or second spring or elastic tab 1040B. The first PCB 1020A is sandwiched between the top cover 1022A and the first terminals of the batteries. The second PCB 1020B is sandwiched between the bottom cover 1022B and the second terminals of the batteries.

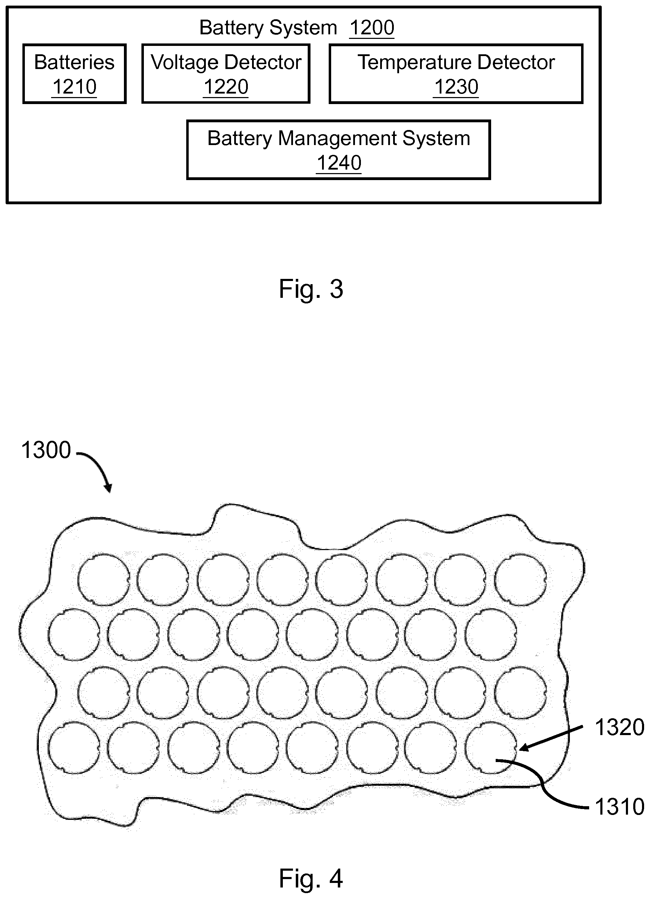

The battery assembly also includes a support structure 1025 that supports and aligns the batteries 1010 in the battery assembly. The support structure comprises a lattice of holes that are spaced apart such that each hole encircles a section of the battery. The support structure maintains the batteries in stable vertical orientation with respect to each other (the support structure more fully shown in Fig. 4).

As shown in Fig. 1B and with reference to Fig. 1A, the batteries are stacked, positioned, or arranged in a side-by-side relationship and arranged in a matrix-shape or grid-structure such that each of the batteries is in electrical contact with the first spring at the first terminal and with the second spring at the second terminal. In this configuration, the batteries can be connected in series, parallel, or a combination of both.

In one example embodiment, the first and second springs are filled with a dispensable thermal-interface material that functions to transfer heat from the batteries to the first and second PCBs. These thermal-interface materials remain electrically isolated from electrical conduction pathways while current flows through the springs. The thermal-interface materials cool the batteries as heat is dissipated away from the batteries to PCBs and/or another heat sink. Examples of thermal-interface materials include, but are not limited to, THERM-A-GAP™ GEL 8010 or GEL 30 manufactured by Parker Chomerics and TG4040 PUTTY manufactured by T-Global Technology.

Figure 1C shows a top view of the bottom PCB 1020B of the battery assembly 1000 in accordance with an example embodiment. A plurality of conductive shapes or regions 1030B arranged in a matrix-shape with rows and columns are integrated on a surface of the bottom PCB. The conductive shapes in the same row are connected to a bus line 1060 via compensation resistors or traces 1050. A plurality of springs or elastic tabs 1040B are mounted to and in contact with the conductive shapes on the PCB. The second end 1015B of the battery 1010 contacts the spring 1040B such that current flows from the battery to the conductive shape 1030B via the spring 1040B and further moves along the compensation resistors 1050 and the bus line 1060 in a direction pointed by arrow 1070, and collected by a power collector 1080 that is connected with the bus lines via connection points 1090.

In one example embodiment, the compensation traces function as resistive traces or resistors to compensate for different path resistances from each battery to the power collector. The sizes of the compensation traces vary based on a distance between the conductive shape 1030B and the connection point 1090 at the end of the bus line. The widths of the compensation traces are arranged in a descending order along the current flow direction. For instance, the closer to the connection point 1090, the narrower the width of the compensation trace is. By varying the widths of the compensation traces, the resistances of the traces vary to compensate for different path resistances along the bus line from the end of each trace to the power collector, and hence the variation of the current from each of the batteries to the connection point is minimized.

In addition to or instead of varying the width of the compensation traces, a thickness or height of the traces can also be varied. Alternatively, the resistance of the traces can be varied by changing the composition of the conductive material, such as doping the conductive material to change its resistance at different locations. As yet another example, a shape of the traces can change in order to vary the resistance.

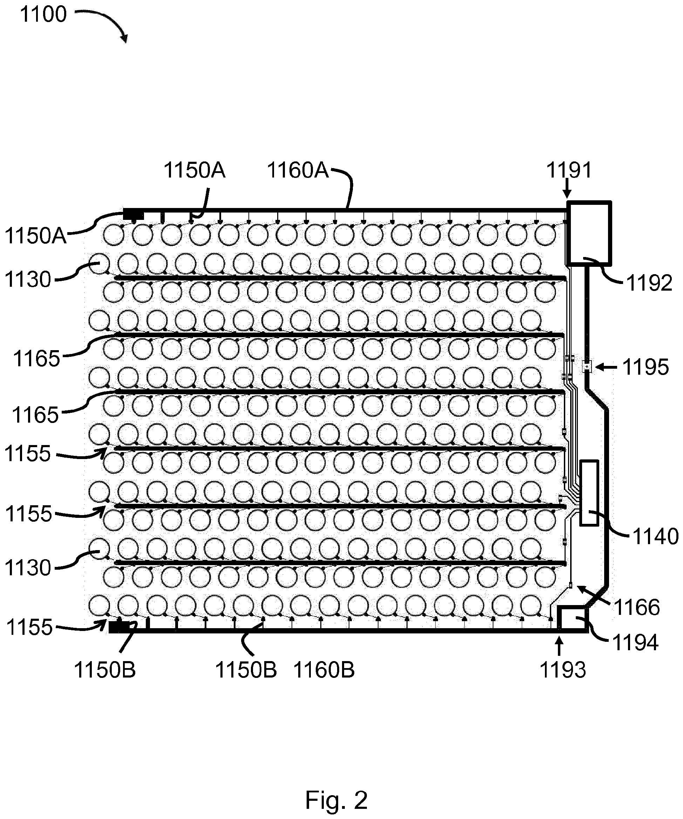

Figure 2 shows a layout of a printed circuit board 1100 of a battery assembly in accordance with an example embodiment. A plurality of conductive shapes or regions 1130 arranged in a matrix-shape with rows and columns are integrated on a surface of the PCB. Each of the conductive shapes is connected with a fuse 1155 and a terminal of a battery such that the batteries are individually fused via the PCB. By way of example, each of the conductive shapes in the top row is electrically connected to the positive terminal of a battery cell, and is also connected to a top or positive bus line 1160A via compensation traces or resistors 1150A. The conductive shapes in the bottom row are connected to negative terminals of the battery cells and to a bottom or negative bus line 1160B via compensation traces or resistors 1150B. Fuses 1155 in the top row and bottom row are connected to the compensation traces 1150A or 1150B on one end, and connected to the corresponding conductive shape on another end. Apart from the top row and the bottom row, every two rows of the inner rows of the conductive shapes share a conductive line 1165 sandwiched between the two rows. The conductive shapes in the two neighbor rows connect to the conductive line individually via their fuses 1155. When the current from a battery exceeds the current carrying capacity of its fuse, for example 15 ampere, the fuse for that battery will break or blow and electrically disconnect or isolate the batteries from the battery assembly. The batteries in the same rows are electrically connected with each other in parallel and each row is connected with the neighbor row in series.

In one example embodiment, voltages of each row of batteries that are connected to each other in parallel are measured by a voltage detector 1140. A plurality of row fuses 1166 are connected to each of the conductive lines 1165 and the voltage detector 1140. The row fuses function as fuses for the voltage detector. When the current from a row of batteries exceeds the current carrying capacity of the row fuses, for example 1 ampere, the row fuse for that row will break or blow and electrically disconnect or isolate the batteries in that row from the voltage detector.

By way of example, batteries are electrically connected with the conductive shapes such that current flows from the battery to the conductive shapes and further into the PCB 1100, and is collected by the positive collector 1192 and the negative collector 1194. Current from the positive terminals of the batteries merges at the top bus line 1160A and moves toward the positive collector 1192. A positive connection point 1191 is at the intersection of the positive bus line 1160A and the positive collector 1192. Current from the negative terminals of the batteries merges at the negative bus line 1160B and moves toward the negative collector 1194. A negative connection point 1193 is at the intersection of the negative bus line 1160B and the negative collector 1194.

In one example embodiment, the compensation traces function as compensation resistors to compensate for different path resistances from each battery to the connection point. The sizes and/or shapes of the compensation traces 1150A or 1150B vary based on a distance between the conductive shape and the connection point 1191 or 1193. The widths of the traces are arranged in a descending order along the current flow direction. For example, the closer to the connection point, the narrower the width of the trace is. By varying the widths of the compensation traces, the resistance of the compensation traces varies to compensate for the different path resistances along the bus line from the end of each trace that joins the bus line to the positive or negative collector, and hence the variation of current from each of the batteries to the corresponding connection point is minimized. In one example, the variation of the current is less than 12%.

A transient voltage suppressor is connected with the positive collector 1192 and the negative collector 1194. The transient voltage suppressor reacts to sudden or momentary overvoltage conditions and functions as a low pass filter to filter voltage spikes with peak voltage values higher than a threshold value.

Figure 3 shows a battery system 1200 in accordance with an example embodiment. The battery system 1200 includes batteries 1210, a voltage detector 1220, a temperature detector or thermal coupler 1230 and a battery management system (BMS) 1240. The BMS 1240 communicates with the voltage detector and the temperature detector. The voltage detector measures the voltage values of each row of batteries and sends the measured voltage values to the BMS. The temperature detectors measure temperature values at a plurality of locations in the battery system and send the measured temperature values to the BMS. The BMS receives temperature values from the temperature detector and voltage values from the voltage detector, and shut down or ramp down the battery system when a received value is higher than a predetermined threshold.

The battery system supplies power to loads or electrical devices. The BMS of the battery system monitors the state of each battery and protects each of the batteries from operating outside the safe operating area such as over current, over voltage, or over temperature.

Figure 4 shows a support structure 1300 of a battery assembly in accordance with an example embodiment. The support structure 1300 includes a plurality of spaced holes or apertures 1310 arranged in a grid, lattice, or matrix shape. The holes are sized and shaped to receive the batteries of the battery assembly. For example, a diameter of a hole corresponds with or is slightly larger than a diameter of a battery that fits into or through the hole. The holes are spaced apart such that each hole encircles a section of a battery such that the support structure maintains the batteries in stable vertical orientation with respect to each other (for example, see Fig. 1A showing the batteries arranged in a vertical orientation).

In one example embodiment, each of the holes include at least three nubs 1320 that extend inwardly toward a radial center of the hole such that each of the batteries fits through the hole and in contact with the nubs. Comparing with relying on the perimeter of the hole to fit batteries into the holes of the support structure, utilizing the nubs to grip each battery requires a lower insert force without damaging the external protective plastic wrap of the batteries.

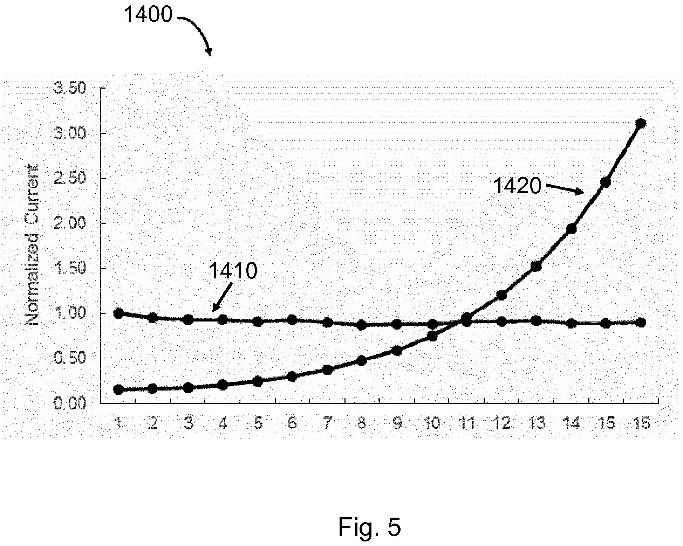

Figure 5 shows a graph 1400 of current distribution from batteries to a connection point in accordance with an example embodiment. The X-axis shows the sequential numbers of the batteries connected with the conductive shapes in the bottom row starting from the conductive shape that is farthest to the connection point 1193 as shown in Fig. 2. As discussed herein, an end of each battery is electrically connected with one of the conductive shapes. The Y-axis shows the normalized current values in arbitrary units drawn from each of the batteries in the bottom row. The dots on line 1420 are the normalized current values without incorporating compensation traces. As the 16^{th} conductive shape is closest to the connection point, the path resistance is the lowest, causing the current drawn from the 16^{th} battery to be the highest. Variation in path resistance causes a non-uniform current distribution from each battery, which leads to issues on reliability and service life. To overcome this problem, the fuses in one example embodiment are designed to have different resistances to compensate for the differences in the path resistance. In another embodiment, the fuses are of the same resistance but are connected to compensation traces with difference resistances, as shown in Fig. 2. The compensation trace closest to the connection point is of the highest resistance with the narrowest width. The compensation trace farthest to the connection point is of the lowest resistance with the widest width. In one example, the size of the trace for the 16^{th} conductive shape is 42 mm long and 0.3 mm wide, and the size of the trace for the first conductive shape is 5 mm long and 15 mm wide. The dots on line 1410 are normalized current values when the traces are precisely designed with different sizes and different resistances. In one example, the current value variation for currents flowing through the compensation traces is less than 12 %.

**As used herein, a "battery assembly" is an assembly of two or more batteries** or batteries cells that are configured in series, parallel, or a mixture of both to deliver a desired voltage, capacity, or power density.

**As used herein, a "conductor" is an object or type of material that allows the** flow of electricity. Examples of a conductive material include, but are not limited to, copper, silver, gold, aluminum, zinc, nickel, brass, and other conductive material (such as other metals, graphite, polymers, and semiconductors).

**As used herein, a "fuse" is a low resistant resistor that melts,** breaks, or **"blows"** when a current exceeds a safe level. Fuses provide overcurrent protection to a load, circuit, and/or electrical component.

As used herein, **"integrally formed" means formed with material common to** the rest of the unit and the connection having no mechanical joints. Integrally is distinguished from two-piece or multi-piece construction in which separate pieces are connected together.

As used herein, **a "printed circuit board" or "PCB"** is a structure that mechanically and electrically connects electronic components using conductive tracks, pads, or pathways. PCBs can be single sided, double sided, and multi-layered.

**As used herein, a "rechargeable battery" is a battery that can be charged,** discharged into a load, and recharged more than once. Rechargeable batteries can be produced with different sizes and shapes and different combinations of electrode materials and electrolyte including, but not limited to, lithium ion, lithium ion polymer, nickel metal hydride, lead-acid, and nickel cadmium.

**As used herein, a "matrix-shape"** is a shape with rows and columns, with the numbers of rows and columns being integers greater than or equal to 1.

As used herein, **a "path resistance"** is the resistance of a path from the beginning of the path to the end of the path.

**As used herein, a** "compensation trace" is a resistor with a predetermined resistance value.

## Claims

1. A battery assembly (1000), comprising:
a first printed circuit board (PCB) (1020A) having a plurality of first conductive shapes arranged in a matrix-shape;
a second PCB (1020B) oppositely disposed from the first PCB (1020 A) and having a plurality of second conductive shapes (1130) arranged in a matrix-shape;
a plurality of first springs (1040A) disposed on the first conductive shapes of the first PCB (1020A);
a plurality of second springs (1040B) disposed on the second conductive shapes (1130) of the second PCB (1020B);
a plurality of batteries (1010) stacked between the first and second PCBs (1020A, 1020B) in a side-by-side relationship each having a first end (1015A) in electrical contact with one of the first springs (1040A) on the first PCB (1020A) and a second end (1015B) in electrical contact with one of the second springs (1040B) on the second PCB (1020B);
a plurality of fuses (1155) integrally formed in the second PCB (1020B), each of the fuses (1155) electrically connected with one of the second conductive shapes (1130); and
a plurality of compensation traces (1150A, 1150B) each connected with one of the fuses (1155) and a bus line (1160A, 1160B) where a current flow along, wherein sizes of the compensation traces (1150A, 1150B) vary based on a distance between the second conductive shapes (1130) and a connection point (1191, 1193) on the bus line (1160A, 1160B) to compensate for resistance differences from each battery (1010) to the connection point (1191, 1193),
wherein the compensation traces (1150A, 1150B) located at a first distance from the connection point (1191, 1193) have a higher resistance compared with the compensation traces (1150A, 1150B) located at a second distance from the connection point (1191, 1193) that is longer than the first distance.

2. The battery assembly (1000) of claim 1, wherein the first and second springs (1140A, 1140B) are arranged in the matrix-shape with an N x M configuration, with N and M being integers greater than or equal to 1.

3. The battery assembly (1000) of claim 1, wherein the first and second springs (1140A, 1140B) are filled with a thermal-interface material that functions to transfer heat from the batteries (1010) to the first and second PCBs (1020A, 1020B).

4. The battery assembly (1000) of claim 1, wherein widths of the compensation traces (1150A, 1150B) are arranged in a descending order along the current flow direction.

5. The battery assembly (1000) of claim 1, wherein the batteries (1010) are individually fused via the fuses (1155) integrated in the second PCB (1020B).

6. The battery assembly (1000) of claim 1, wherein the batteries (1010) in a row are electrically connected to each other in parallel and an average voltage of the row of batteries (1010) is detected by a voltage detector and sent to a battery management system.

## Patentansprüche

1. Batterieanordnung (1000), umfassend:
eine erste gedruckte Leiterplatte (PCB) (1020A) mit einer Mehrzahl von ersten leitenden Formen, die in einer Matrixform angeordnet sind;
eine zweite PCB (1020B), die gegenüber der ersten PCB (1020A) angeordnet ist und eine Mehrzahl von zweiten leitenden Formen (1130) aufweist, die in einer Matrixform angeordnet sind;
eine Mehrzahl von ersten Federn (1040A), die auf den ersten leitenden Formen der ersten PCB (1020A) angeordnet sind;
eine Mehrzahl von zweiten Federn (1040B), die auf den zweiten leitenden Formen (1130) der zweiten PCB (1020B) angeordnet sind;
eine Mehrzahl von Batterien (1010), die zwischen der ersten und der zweiten PCB (1020A, 1020B) in einer Nebeneinanderbeziehung gestapelt sind und jeweils ein erstes Ende (1015A) in elektrischem Kontakt mit einer der ersten Federn (1040A) auf der ersten PCB (1020A) und ein zweites Ende (1015B) in elektrischem Kontakt mit einer der zweiten Federn (1040B) auf der zweiten PCB (1020B) aufweisen;
eine Mehrzahl von Sicherungen (1155), die integral in der zweiten PCB (1020B) ausgebildet sind, wobei jede der Sicherungen (1155) mit einer der zweiten leitenden Formen (1130) elektrisch verbunden ist; und
eine Mehrzahl von Kompensationsbahnen (1150A, 1150B), die jeweils mit einer der Sicherungen (1155) und einer Busleitung (1160A, 1160B) verbunden sind, wo ein Strom entlang fließt, wobei Größen der Kompensationsbahnen (1150A, 1150B) basierend auf einer Entfernung zwischen den zweiten leitenden Formen (1130) und einem Verbindungspunkt (1191, 1193) auf der Busleitung (1160A, 1160B) variieren, um Widerstandsunterschiede von jeder Batterie (1010) zum Verbindungspunkt (1191, 1193) zu kompensieren,
wobei die Kompensationsbahnen (1150A, 1150B), die sich in einer ersten Entfernung vom Verbindungspunkt (1191, 1193) befinden, einen höheren Widerstand aufweisen als die Kompensationsbahnen (1150A, 1150B), die sich in einer zweiten Entfernung vom Verbindungspunkt (1191, 1193) befinden, die länger als die erste Entfernung ist.

2. Batterieanordnung (1000) nach Anspruch 1, wobei die ersten und zweiten Federn (1140A, 1140B) in der Matrixform mit einer N x M-Konfiguration angeordnet sind, wobei N und M ganze Zahlen größer oder gleich 1 sind.

3. Batterieanordnung (1000) nach Anspruch 1, wobei die ersten und zweiten Federn (1140A, 1140B) mit einem thermischen Grenzflächenmaterial gefüllt sind, das zum Übertragen von Wärme von den Batterien (1010) auf die erste und die zweite PCB (1020A, 1020B) dient.

4. Batterieanordnung (1000) nach Anspruch 1, wobei Breiten der Kompensationsbahnen (1150A, 1150B) in einer absteigenden Reihenfolge entlang der Stromflussrichtung angeordnet sind.

5. Batterieanordnung (1000) nach Anspruch 1, wobei die Batterien (1010) durch die Sicherungen (1155), die in die zweite PCB (1020B) integriert sind, einzeln gesichert sind.

6. Batterieanordnung (1000) nach Anspruch 1, wobei die Batterien (1010) in einer Zeile elektrisch parallel zueinander geschaltet sind, und eine mittlere Spannung der Zeile von Batterien (1010) von einem Spannungsdetektor detektiert und an ein Batterieverwaltungssystem gesendet wird.

## Revendications

1. Ensemble batterie (1000), comprenant :
une première carte de circuits imprimés (PCB) (1020A) ayant une pluralité de premières formes conductrices agencées dans une forme de matrice ;
une seconde PCB (1020B) disposée de manière opposée à la première PCB (1020A) et ayant une pluralité de secondes formes conductrices (1130) agencées dans une forme de matrice ;
une pluralité de premiers ressorts (1040A) disposés sur les premières formes conductrices de la première PCB (1020A) ;
une pluralité de seconds ressorts (1040B) disposés sur les secondes formes conductrices (1130) de la seconde PCB (1020B) ;
une pluralité de batteries (1010) empilées entre les première et seconde PCBs (1020A, 1020B) dans une relation côte-à-côte, chacune ayant une première extrémité (1015A) en contact électrique avec l'un des premiers ressorts (1040A) sur la première PCB (1020A) et une seconde extrémité (1015B) en contact électrique avec l'un des seconds ressorts (1040B) sur la seconde PCB (1020B) ;
une pluralité de fusibles (1155) formés d'un seul tenant dans la seconde PCB (1020B), chacun des fusibles (1155) étant relié électriquement à l'une des secondes formes conductrices (1130) ; et
une pluralité de pistes de compensation (1150A, 1150B) reliées chacune à l'un des fusibles (1155) et une ligne de bus (1160A, 1160B) le long de laquelle un courant circule, des tailles des pistes de compensation (1150A, 1150B) variant sur la base d'une distance entre les secondes formes conductrices (1130) et un point de connexion (1191, 1193) sur la ligne de bus (1160A, 1160B) pour compenser des différences de résistance entre chaque batterie (1010) et le point de connexion (1191, 1193),
les pistes de compensation (1150A, 1150B) situées à une première distance du point de connexion (1191, 1193) ayant une résistance plus élevée par comparaison aux pistes de compensation (1150A, 1150B) situées à une seconde distance du point de connexion (1191, 1193) qui est plus longue que la première distance.

2. Ensemble batterie (1000) selon la revendication 1, dans lequel les premiers et seconds ressorts (1140A, 1140B) sont agencés dans la forme de matrice avec une configuration N x M, N et M étant des nombres entiers supérieurs ou égaux à 1.

3. Ensemble batterie (1000) selon la revendication 1, dans lequel les premiers et seconds ressorts (1140A, 1140B) sont remplis avec un matériau d'interface thermique qui sert à transférer de la chaleur des batteries (1010) aux première et seconde PCB (1020A, 1020B) .

4. Ensemble batterie (1000) selon la revendication 1, dans lequel des largeurs des pistes de compensation (1150A, 1150B) sont agencées dans un ordre décroissant selon la direction de circulation de courant.

5. Ensemble batterie (1000) selon la revendication 1, dans lequel les batteries (1010) sont sécurisées individuellement par l'intermédiaire des fusibles (1155) intégrés dans la seconde PCB (1020B).

6. Ensemble batterie (1000) selon la revendication 1, dans lequel les batteries (1010) dans une rangée sont reliées électriquement les unes aux autres en parallèle et une tension moyenne de la rangée de batteries (1010) est détectée par un détecteur de tension et envoyée à un système de gestion de batterie.
